# EUROPEAN PATENT SPECIFICATION

(11) **EP 3 354 082 B1**
(45) Date of publication and mention of the grant of the patent: **21.08.2024**
(21) Application number: 15779022.1
(22) Date of filing: 25.09.2015
(51) Int. Cl.: H04W 52/24, H04W 72/04, H04W 72/541, H04J 11/00

(54) **INTERFERENCE MANAGEMENT FOR MULTIUSER IN-COVERAGE DEVICE TO DEVICE COMMUNICATION**
INTERFERENZVERWALTUNG FÜR MEHRBENUTZERKOMMUNIKATION VON VORRICHTUNG ZU VORRICHTUNG INNERHALB DER ABDECKUNG
GESTION DE BROUILLAGE POUR UNE COMMUNICATION DE DISPOSITIF À DISPOSITIF MULTIUTILISATEUR DANS LA COUVERTURE

(43) Date of publication of application: 01.08.2018
(73) Proprietor: Telefonaktiebolaget LM Ericsson (publ), 164 83 Stockholm (SE)
(72) Inventor: BOUDREAU, Gary David, Kanata, Ontario K2K 2K9 (CA); SEYEDMEHDI, Hossein, Kanata, Ontario K2K 0C3 (CA)
(74) Representative: Zacco Sweden AB
(86) International application number: PCT/IB2015/057402
(87) International publication number: WO 2017/051221

(56) References cited:
- WO-A1-2014/117377
- US-A1- 2009 325 625
- US-A1- 2014 274 183
- LIN XINGQIN ET AL: "The Interplay Between Massive MIMO and Underlaid D2D Networking", IEEE TRANSACTIONS ON WIRELESS COMMUNICATIONS, IEEE SERVICE CENTER, PISCATAWAY, NJ, US, vol. 14, no. 6, 1 June 2015 (2015-06-01), pages 3337 - 3351, XP011584073, ISSN: 1536-1276, [retrieved on 20150608], DOI: 10.1109/TWC.2015.2404435

## Description

### Technical Field

The present disclosure relates to device-to-device (D2D) communication and in particular to interference management for multiuser in-coverage D2D communications.

### Background

Device-to-device (D2D) communication has been developed to meet growing capacity demands due to rapid growth of wireless data services. In a D2D communication scenario, two user equipment (UEs) devices directly communicate with each other without having the payload traversed through the backhaul network. D2D communication is a promising feature that can potentially scale the capacity of the network, improve network resource utilization, such as network throughput, spectrum utilization, reduce transmission delays and offload traffic from the network nodes, as well as improve coverage for user terminals (UE's) that do not have network coverage.

The performance and advantages of D2D communication is currently an active topic of investigation in 3GPP (3rd Generation Partnership Program) RAN (Radio Access Network) forums, for use e.g. in wireless communications technologies such as those governed by 3GPP (LTE (Long Term Evolution) and LTE-Advanced (LTE-A) standards.

The D2D communication may be bi-directional, where both user terminals receive and transmit using the same or different resources. D2D communication may also be used in a scenario where one of the user terminals transmits and the other one receives the signals. Still further, D2D communication may be used in a point-to-multipoint scenario, such as for example multicast, or broadcast communications, when a plurality of devices receive signals from the same transmitting device. This scenario is particularly useful for emergency services or public safety operation to spread vital information to several devices in an affected area. Still further, D2D communications may be used also for local social networks, content sharing, advertising, and various mobile-to-mobile applications.

In some wireless systems, the D2D UEs operate under the supervision of a radio access network, referred to as cellular network assisted D2D communications. In this case, UEs in the vicinity of each other can establish a direct radio link, i.e. a D2D direct bearer. This direct radio link is referred to as 'network (NW) link' or a 'D2D-NW link'. The D2D-NW link is used for example for resource assignment for D2D communication, maintenance of radio link quality of D2D communication link, etc. While UEs communicate over the D2D-NW link, they also maintain a cellular connection with their respective serving eNB. Furthermore, in some scenarios, D2D UEs may operate to establish direct communication without the intervention of the network infrastructure.

The specification uses the term 'network node' for any kind of network equipment including but not limited to eNodeB's (eNB), Node B's (NB), base stations (BS), wireless access points (AP), base station controllers (BSC), radio network controllers (RNC), relay, donor node controlling relays, base transceiver stations (BTS), transmission points, transmission nodes, remote radio units (RRU), remote radio heads (RRH), nodes in distributed antenna system (DAS), core network nodes, mobility management entities (MME), etc.

The term 'D2D capable UE' or 'D2D wireless UE' or D2D wireless device' is used in this specification for any type of wireless device, which is capable of at least D2D communication through a wireless link. In some embodiments, the UE may be a mobile communication device, a subscriber station, or another device that is configured to communicate with a wireless systems in conformance with an appropriate protocol. Examples of such D2D wireless devices could be sensors, modems, smart phones, machine type (MTC) devices, PDAs, iPADs, tablets, laptop embedded equipment (LEE), laptop mounted equipment (LME), USB dongles, etc.

The D2D devices that communicate with each-other are called in some instance a 'D2D pair', and the communication between the D2D wireless devices of the pair is referred to as 'D2D communication', which takes place along a 'D2D link'.

The specification also uses the term 'wireless access network (WAN) UE', or 'WAN device' to a device that is capable to UL and DL communication with a network node. Example of these devices are, as for the D2D devices, smart phones, MCT devices, PDAs, iPADs, tablets, LEE, LME, USB dongles, sensors, modems, etc. The term 'candidate WAN UE' or 'candidate WAN device' is used for a WAN device that is considered by the network node as a candidate to share the transmission resources with a D2D pair. The communication between the WAN devices and the network node is referred to as 'WAN communication' which takes place along a 'WAN link'.

Although terminology from 3GPP LTE (or E-UTRAN) is used herein, this should not be seen as limiting the embodiments described here to LTE systems only. Other wireless systems, including WCDMA, UTRA FDD, UTRA TDD, and GSM/GERAN/EDGE and other current and future technologies, may also benefit from exploiting the ideas covered within this disclosure. Furthermore, this description may apply to scenarios in which network nodes employ differing radio access technologies (RATs). In some embodiments, short-range technologies, such as Bluetooth or Wi-Fi may be used. In other embodiments, D2D operation may reuse licensed LTE spectrum or unlicensed LTE spectrum. D2D communication may be non-transparent to the wireless system and may occur on a cellular spectrum (i.e. in-band), or unlicensed spectrum (i.e. out-band).

The embodiments described refer to D2D wireless devices are applicable to single carrier or multi-carrier or carrier aggregation based D2D communication.

As well, in the context of this specification, the term 'downlink' (DL) is used for the transmission from a network node to a user device, and the term 'uplink' (UL) is used for the transmission from a user device to a network node.

US 2009/325625 A1 discloses that a network determines that a first radio node communicating on a radio resource with a second radio node is interfering with a third radio node communicating on the radio resource with the network. The network manages the interference by controlling transmit power of at least one of the first radio node and the third radio node. It may be by sending a command that indicates an amount by which the first or second radio node is to decrease its transmit power, and/or that indicates an amount by which the third radio node is to boost its transmit power. The network can measure a sounding signal it triggers from the first radio node, measure and compare to a threshold that guarantees a QoS for the third radio node, and compute appropriate backoff or boost values. The first and second radio nodes may be using device-to-device communications or a femto network.

Lin Xingquin et al.: "The Interplay Between Massive MIMO and Underlaid D2D Networking", IEEE Transactions on Wireless Communications, vol. 14, no. 6, XP011584073, studies the interplay between massive MIMO and underlaid D2D networking in a multi-cell setting. Cellular and D2D spectral efficiencies are investigated under both perfect and imperfect channel state information (CSI) at the receivers that employ partial zero-forcing.

WO 2014/117377 A1 discloses a method for resource allocation for device-to-device communication in a cellular system comprising a number C of cellular UE and a number D of D2D UE pairs, which are divided into ND2D packages. The method comprises: a) for cellular spectrum resources occupied by a cellular UE c, determining transmit power for a D2D package by maximizing a respective utility function, wherein the D2D package comprises one or more D2D UE pairs operable to share the cellular spectrum resources; b) repeatedly performing step a) for each of said number N of D2D packages against the cellular spectrum resources occupied by each of said number C of cellular UEs; c) calculating values of the utility functions based on the determined transmit power for all of said N D2D packages against the cellular spectrum resources occupied by each of said number C of cellular UEs; d) sorting the calculated values of the utility functions in descending order to determine cellular spectrum resource allocation for the plurality of D2D UE pairs.

### Summary

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention. In order to mitigate the interference between D2D UEs and WAN UEs, according to the current procedures, the network must allocate dedicated resources in time and/or frequency for D2D communication. Therefore, the WAN UE is deprived of those resources, thus reducing the spectral efficiency.

Accordingly, embodiments presented herein aim to provide a way of improving the spectral efficiency associated with D2D communication.

There is also a need to provide methods and apparatuses that enable a D2D wireless device to more efficiently continue the D2D communication regardless of the type of coverage in which the D2D communication takes place. The D2D transmissions and D2D wireless devices should not cause unnecessary or additional degradation to the other UEs and/or network nodes when operating in partial coverage or out-of-coverage scenarios.

In addition, there is a need to enable the D2D wireless devices to continue their operation in public safety situations, when for example network nodes are unavailable or partially available. Furthermore, a solution where a network node does not have to always maintain a communication link with D2D UEs for the D2D operation to continue. The network node may have resource constraints due to lack of resources, heavy load or a disastrous situation.

The need for frequent communication between nearby devices has increased lately with the capability of smart devices for content share, gaming, social networking, etc. whereas the conventional UL/DL transmission mode in a cellular network fails to address this demand efficiently. Therefore, there is a need to enable the network to reuse the spectrum for the D2D communication, thus enhancing the spectral efficiency.

The present disclosure provides embodiments which can be implemented in a network node and/or a D2D capable UE to address some of the above needs. The network node herein can be a serving network node of the D2D UE or any network node with which the D2D UE can establish or maintain a communication link and/or receive information (e.g. via a broadcast channel).

Further embodiments are also provided. According to some embodiments, network nodes, computer programs, computer program products are also provided.

### Brief Description of the Drawings

The accompanying drawing figures incorporated in and forming a part of this specification illustrate several aspects of the disclosure, and together with the description serve to explain the principles of the disclosure.
Figures 1A, 1B and 1C illustrate three possible D2D coverage scenarios, namely 'In- Coverage', 'Partial Coverage' and 'Out-of-Coverage' scenarios;
Figure 2A and 2B illustrate the existing LTE Release 12 standardized D2D communication procedures, wherein Figure 2A shows the control messages for the `D2D Transmit In-Coverage' case as in Figure 1B, and Figure 2B shows the control messages for the 'D2D Transmit out-of-Coverage' case shown in Figure 1C;
Figure 3 shows an example of a D2D communication between two UEs coexisting with another UE, for which the embodiments described herein may apply;
Figure 4 illustrates a multiuser in-coverage D2D scenario where an embodiment of the method of interference management may be used;
Figure 5A and 5B illustrate a flowchart of a method of in-coverage D2D communication according to an embodiment of the present disclosure;
Figure 6 illustrates a flowchart 260 of a method of in-coverage D2D communication according to an embodiment of the present disclosure; and
Figure 7 shows a block diagram of an embodiment of a network node that enables interference management for multiuser in-coverage D2D.

### Detailed Description

The embodiments set forth below represent information to enable those skilled in the art to practice the embodiments and illustrate the best mode. A number of exemplary embodiments will be presented. It should be noted that these embodiments are not mutually exclusive. Components from one embodiment may be tacitly assumed to be present in another embodiment and it will be obvious to a person skilled in the art how those components may be used in the other exemplary embodiments.

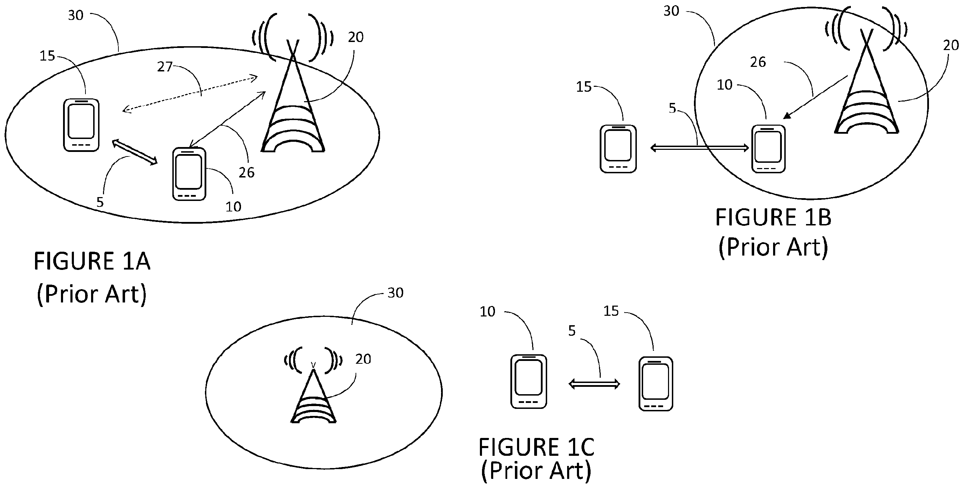

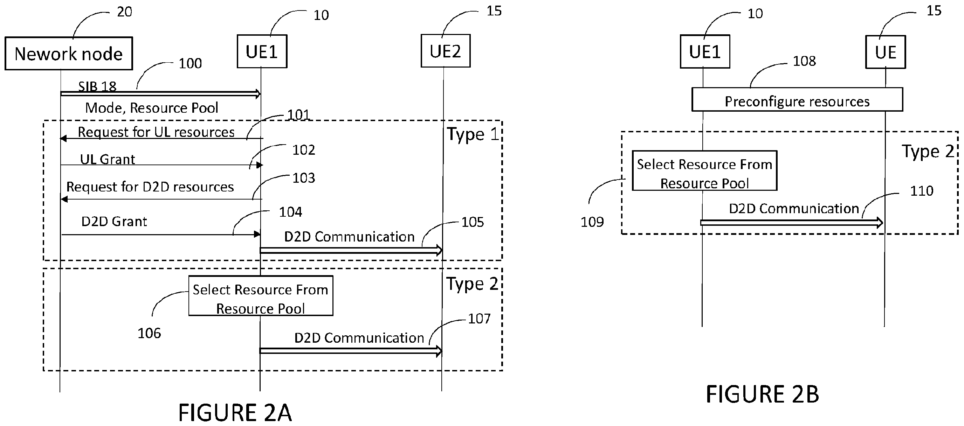

Figures 1A, 1B, 1C, 2B and 2C illustrate three existent coverage scenarios for D2D communication.

An example of an in-coverage scenario is shown in Figure 1A. In this scenario, also called in-network (IN) coverage, the D2D communications are under network coverage. Figure 1A shows D2D UEs 10 and 15 in the coverage area 30 of network node 20, exchanging D2D communications among themselves on D2D link 5. In this scenario, D2D wireless device 10 also maintains a WAN communication link with the network, as shown by line 26. D2D device 10 operates in a D2D mode for communications with D2D device 15, and operates in a WAN (UL/DL) mode with the network node 20. Alternatively or at the same time, D2D device 15 may also have a WAN communication link with network node 20, as shown by the dotted line 27.

An example of partial coverage scenario is shown in Figure 1B. In this scenario, also called partial-network (PN) coverage, at least one D2D wireless device, e.g. UE 15, is not under the network coverage, and the other D2D wireless device, e.g. UE 10, is under the network coverage. The D2D wireless device 15 not being under the network coverage can be due to various factors, such as lack of any network node in its vicinity or insufficient resources in any of the network nodes in its vicinity. On the other hand, D2D wireless device 10 may have an established WAN link 25 with the network node 20.

An example of an out-of-coverage scenario is shown in Figure 1C. In this scenario, also called out-of-network (OON) coverage, the D2D wireless devices 10 and 15 communicate with each other and are not under network node coverage so that the network cannot provide any assistance to the devices 10 and 15. Figure 1C illustrates that the D2D UEs 10 and 15 do not and cannot receive signals from and/or transmit signals to the network node 20 (or any other network nodes, not shown). As for the PN coverage case, the lack of coverage may be due to various factors, such as complete absence of the network coverage in the vicinity of the D2D UEs 10 and 15, the distance between de UEs and the network node, the geography of the space, insufficient resources in the network nodes to serve or manage the D2D UEs, etc.

The current standardization of D2D in LTE Release 12 defines two basic types of D2D communication for in-coverage D2D uses scenario shown in Figure 1A. Type 1 (aka Mode1) D2D communication is controlled by a serving eNB or primary cell (PCell) eNB in the case of a carrier aggregation environment. In particular, the physical resource blocks (PRBs) that are employed by the D2D transmission are controlled and scheduled by the serving eNB. Type 2 (aka Mode 2) D2D communication is based on use of reserved PRB's for D2D only and is contention based. The current specification of D2D in LTE Release 12 specifies the uplink channel as the medium for D2D communication.

Figure 2A and 2B illustrate the LTE Release 12 standardized D2D communication procedures. In these Figures, the network node is denoted with 20, as in the previous illustrations, D2D UE 10 of a D2D pair operates as a transmitting D2D UE, and D2D UE 15 of the D2D pair operates in this example as the receiving D2D UE. Figure 2A shows control messages for the `D2D Transmit In-Coverage' case (scenario shown in Figure 1A and Figure 1B), where the network node 20 may control the D2D UE transmit power in conjunction with assigning scheduled transmission resources for the D2D communication as for the D2D Type 1 communication.

In the in-coverage embodiment (see Figure 1A) and partial coverage embodiment (see Figure 1B), the network node 20 provides the UE 10, in the area of coverage of node 20, with control information to enable activation of D2D communications, shown at 100 on Figure 2A. In general, UE 10 may be configured to enable D2D functionality upon receiving a special System Information Block (SIB) message from the network node 20. This may be for example a SIB 18 signal, used in LTE networks to provide authorization for D2D operation, configuration information for D2D operation, assistance information for preferred spectrum for D2D operation, or/and assistance information for D2D synchronization source set-up.

In Type 1 D2D communication, as shown at 101 on Figure 2A, UE 10 transmits to network node 20 a request for uplink transmission resources. For example, this request may be a scheduling request similar to SR in legacy LTE procedures, such as a dedicated scheduling request (D-SR) or a scheduling request sent on the Random Access Channel (RACH).

On receipt of an uplink grant from the network node 20, shown at 102, UE 10 uses this UL grant to transmit to network node 20 a request for D2D transmission resources (i.e. resources for Proximity Services or ProSe communication), as shown at 103. For example, this can be a message similar to the BSR (Buffer Status Report) in legacy LTE procedures.

In response to the request, the network node 20 allocates further resources to the D2D UE pair for the D2D communication and D2D UE 10 receives from the network node 20 this allocation, as shown by the D2D grant message, in step 104.

At step 105, D2D communication between UE 10 and UE 15 takes place, using the D2D transmission resources allocated by the network node 20 in step 104 for D2D Type 1 Transmit In-Coverage.

For Type 2 D2D communication, the network node 20 broadcasts information about a pool of resources that may be shared by the UEs that attempt to establish D2D communication. The resource pools may be provided via system information broadcast (SIB) messaging. In this case, the transmitting UE 10 selects the transmission resources for D2D communication from the resource pool, as shown at 106. The resource selection by UE 10 may be in contention with other D2D UEs in the network. If successful in securing the selected resources, the pair of D2D wireless devices, 10 and 15, will use the selected resources for the D2D communication, as shown at 107.

Figure 2B shows the control messages for the 'D2D Transmit out-of-Coverage' case shown in Figure 1C. This uses a Type 2 D2D communication, but in this case, the resource pool configuration is obtained from a preconfiguration of resources, as shown at 108. The transmitting D2D UE 10 selects the transmission resources from the preconfigured resource pool, shown at 109, possibly in contention with other D2D UEs in the proximity. If successful in securing the selected preconfigured resources, the pair of D2D wireless devices 10 and 15 will use the selected resources, for a D2D communication 110 among themselves.

Typically, for Type 1 D2D communication, the network node 20 controls the D2D transmit power in conjunction with assigning the scheduled PRBs. D2D UEs involved in Type 2 D2D operation transmit at, or close to full power, in order to maximize their potential coverage area, particularly in the first stages of the establishment of a D2D connection. However, for both Type 1 and Type 2 D2D communications, the transmit power in many scenarios does not have to be at, or close to the maximum transmit power of the D2D device for establishment of a successful D2D communication, particularly if the two D2D devices are in close proximity. Therefore, opportunities occur for the UEs involved in the D2D transmission to operate at reduced powers, enabling reuse of the PRBs employed by a first D2D transmission, by a second D2D transmission or by a WAN UE transmission.

Accordingly, some embodiments of the present disclosure are directed to enabling the network to reuse the spectrum used by the D2D communication, thus enhancing the spectral efficiency.

In particular, some embodiments described herein are provided for enabling co-channel transmission of one or more D2D pairs using the same transmission resources as the transmission resources used by one or more WAN UEs. This mode of operation is also referred herein as 'overlay'. To enable the 'overlay' mode of operation, some embodiments described herein provide interference management of multiuser in-coverage device-to-device communications.

Some proposed embodiments enable a D2D UE to more efficiently continue the D2D communication regardless of the type of coverage in which the D2D communication takes place

In the following, the network node is referred to as an eNB, the D2D wireless devices 10 and 15 are referred to as D2D wireless devices or D2D UE's and the user device 25, not involved in D2D communications but sharing the transmission resources with the D2D pair is referred to as a WAN device 25 or WAN UE. Also, the transmission resources used by the WAN UEs and D2D UEs are alternatively referred to as PRBs (Physical Resource Blocks). It is also to be mentioned that in LTE, the D2D transmissions employ the uplink FDD channel by default so the embodiments described herein refer to uplink communication. However, it is noted that the same principles of interference management may be used for downlink transmissions.

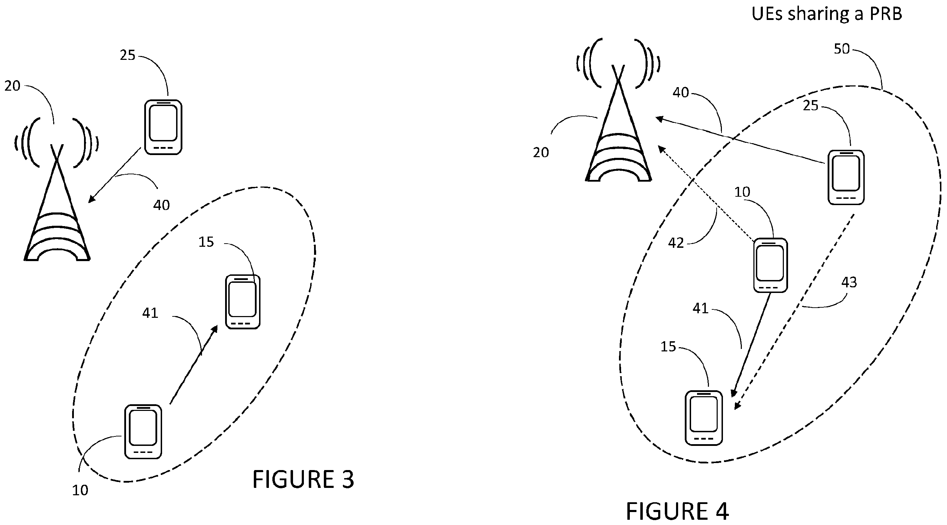

With respect to Figure 3, a WAN UE 25 is scheduled to transmit to a network node 20, as shown by signal 40. At the same time, there is a D2D pair, shown by D2D wireless devices 10 and 15, which communicate directly with each other, as shown by signal 41. Three scenarios, overlay, scheduled D2D communications and contention based D2D communication are described next.

An overlay scenario is when the D2D pair uses the same transmission resources as those used by the user device 25. Scheduled D2D operation takes place when the D2D pair receives from the network node 20 a specific grant to transmit. The grant message received from the network node 20 indicates the physical resource block(s) (PRB(s)) that the D2D pair can use for D2D transmission. That is, the time and the frequency resources are indicated in the grant message. Contention based D2D takes place when the D2D pair does not receive a specific grant from the network node for transmission, rather physical resources are allocated to a group of D2D UEs that use those PRBs on a contention basis.

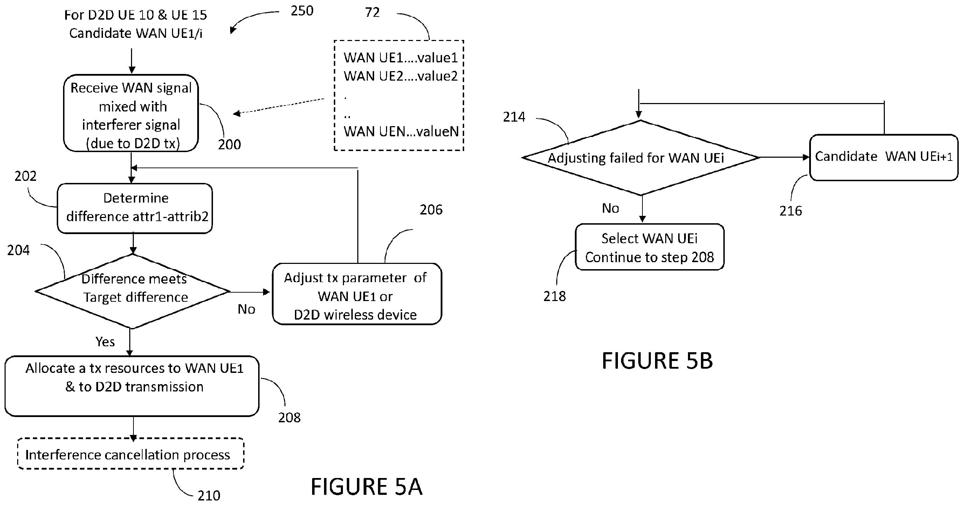

Figure 4 illustrates a multiuser in-coverage D2D scenario where a method of interference management according an embodiment of the present disclosure may be used. Figure 4 is described in conjunction with Figure 5A, which illustrates a flowchart of a method of interference management of multiuser in-coverage device-to-device communications at a network node according to an embodiment of the present disclosure.

In the scenario shown in Figure 4, the D2D communication is scheduled by the network node 20 and the transmission resources are shared with the WAN UE 25. The UEs 10, 15 and 25 that share the transmission resources are shown on Figure 4 inside a dotted block 50. Figure 4 also illustrates interferer (or interfering) signals 42 and 43 as dotted lines. Interferer signal 42 caused by the D2D communication is mixed in (interferes with) the desired signal 40 transmitted by the WAN device 25 to the network node 20. Interferer signal 43 is caused by the transmission from WAN device 25 and is mixed in (interferes with) the desired signal 41 transmitted by the transmitting D2D device 10 to the D2D receiving D2D device 15. While Figure 5A shows operations 250 performed at network node 20 for management of multi-user in coverage D2D communications, similar operations may be applied at the transmitting D2D device 10. Also, the method illustrated in Figure 5A may be applied to any one of an overlay, scheduled D2D, and contention based scenarios, as it does not specifically require that transmission resources are shared, scheduled or obtained in contention with other UEs of the network.

In Figure 5A, at step 200, a WAN signal 40 is received at network node 20 from the WAN UE 25. The WAN signal 40 is affected by interference from the D2D communication, i.e. is mixed with an interferer signal 42 caused by the transmitting D2D UE 10.

In Figure 5A, the eNB 20 determines an attribute value of interest from the received signal. In particular, a first attribute value is determined for signal 40 and a second attribute value is determined for the interferer signal 42. Next, in step 202, node 20 determines a difference (or attribute value difference) between the first and the second attribute values. The attribute values could be, for example, measurement data on the relative receive powers and/or channel quality of the transmissions from WAN UE 25 on link 40, and the power of the D2D UE transmission 41. The channel strength and/or CQI (channel quality indicator) can be derived for D2D link 41 from well-known LTE channels such as the SRS (Sounding Reference Signal) on the UL or RACH (Random Access Channel) transmissions. The attribute value is measured received power, nonetheless, it will be recognized that similar principles can be used with other attribute values.

In step 204, the (attribute value) difference is compared with a target difference, *Threshold1.* The target difference is chosen to enable (or at least enhance the ability to perform) interference management, including performing an interference cancellation process, to separate the interferer signal from the desired signal. The value of *Threshold1* could be for example predetermined, set by the network, or calculated using a function of one or more of the received power of WAN, received power of D2D, CQI or other parameters. Other ways of determining the *Threshold1* may be established, taking into account the network configuration and operational parameters. When the attribute is measured received power, the attribute value difference is also denoted herein as *Δpower.*

At step 208, the network node 20 allocates resources to the D2D transmission and to the WAN UE, if the target difference is met, as shown by branch YES of the flowchart. If the target difference is not met, shown by branch NO of decision block 204 in Figure 5A, the network node 20 controls a transmitting parameter of WAN device 25 and/or of the D2D wireless device 10 to adjusts the difference to meet the target difference (step 206).

For example, in the case that *Δpower* between the D2D transmission and the transmission from the WAN UE is less than *theThreshold1* value, the network node 20 may perform a power adjustment of the transmission powers of the WAN UE 25 and/or the transmitting D2D UE 10. If the received power of the WAN signal 40 at the eNB 20 is higher than the received power of the interferer signal 42 caused by the D2D communication, the eNB 20 may power control down the D2D transmitting UE 10 and/or power control up the WAN UE 25 (within allowed transmission power limits) to achieve the target power difference. If signal 40 has a lower received power at the eNB 20 than that of the interferer signal 42, the eNB 20 may choose to power control down the WAN UE 25 and/or power control up the transmitting D2D UE 10 (within allowed transmission power limits) order to achieve the target power difference. The power control information may be transmitted from the eNB 20 in various ways, such as in the D2D grant message or as part of a D2D power control message.

The power mismatch between the received powers (or other attribute values) can be exploited in the eNB 20, by having an eNB receiver implement interference management such as an interference cancellation process, as shown in step 210. Once a WAN UE is selected for transmission using the same resources as the D2D pair, upon reception of a WAN UE signal and the interfering D2D signal, the eNB 20 detects the stronger signal, and interference-cancels it from the composite signal to detect the weaker signal, if necessary. Successive interference cancellation (SIC), parallel interference cancellation (PIC) and interference rejection combining (IRC) are some examples of interference cancellation techniques that may be applied. For the case of one WAN transmission and one D2D transmission as in Figure 4, eNB 20 can first detect the stronger of the D2D interferer or WAN signal 40 or 42 in the composite received signal, remove it from the composite received signal using interference cancelation methods and then detect the weaker signal.

If the stronger signal received at eNB 20 is signal 40 from the WAN UE 25, no interference cancellation may be necessary, e.g. if an SINR (Signal to Noise Ratio) target can be met by the initial detection. If the WAN UE signal 40 is the weaker signal, interference cancellation may be employed to remove the D2D interferer signal 42, followed by detection of the desired WAN UE signal 40. A similar approach may be used at the receiving D2D UE 15, where interference management and, possibly interference cancellation, may be employed to remove the WAN interferer signal 43 caused by the WAN transmission, to subsequently detect the desired D2D transmission. The ability to perform interference management and, if necessary, interference cancellation, in such cases, may depend on meeting target differences between attributes of the desired signal and of the interferer signal, such as noted above.

According to the invention, a plurality of candidate WAN UE's, referred herein also as WAN UEᵢ (where i represents an integer index value, i= 1 to N, N total number of candidate WAN UEs), are considered for sharing transmission resources with a given D2D pair of UE's 10 and 15. In this case, the method according to the flowchart in Figure 5A can be performed for each such candidate WAN UEᵢ. In considering a second WAN UE with an associated second WAN signal received at the eNB 20, the eNB determines a second attribute value difference between a further first attribute value of the second WAN signal and a further second attribute value of a second interferer signal mixed with the second WAN signal by the D2D communication. If the second attribute value difference meets the target difference, the eNB 20 may additionally allocating transmission resources to the second WAN UE, for communication with the network node.

Similarly, there may be more than one transmitting D2D device interfering with a given WAN UE. In such a case, the eNB 20 may determine a third attribute value difference between the first attribute value of a WAN signal and a further second attribute value of a second interferer signal mixed with the WAN signal by the second transmitting D2D wireless device. If the third attribute value difference meets the target difference , the eNB 20 may additionally allocate the shared transmission resource to the second transmitting D2D wireless devices for D2D communication.

Furthermore, if more WAN UE's all use the same transmission resources, the eNB 20 may need to interference manage the transmission between individual WAN UE transmissions as well. According to one embodiment, this may be achieved by adjusting the power level of a WAN UEᵢ above all the power level of all other UEs (D2D UE and WAN UE's considered so far), at each iteration, by an amount required to meet a target difference. For example, for two WAN UEs, WAN UE1 and WAN UE2, and one transmitting D2D UE, the following can be performed: (a) adjusting the transmitter power for WAN UE1 above the transmitter power for WANUE2 and above the transmitter power for the transmitting D2D UE, so as to meet a respective target difference in both cases, to detect and cancel the signal from WAN UE1; (b) adjusting the transmitter power for WAN UE2 above the transmitter power for the transmitting D2D UE to detect and cancel the signal from WAN UE2; (c) if needed, detecting the signal from D2D UE.

Figure 5B shows the particular case when, after step 206 is performed for a given candidate WAN UEᵢ, the target difference cannot be met by adjusting the transmission parameters of the given candidate WAN UEᵢ and/or of the D2D UE 10. In this case, a new candidate WAN UEᵢ₊₁ (e.g. from the proximity) may be considered, as shown in step 216. As per the flowchart of Figure 5A, the steps 200-206 are repeated for this new candidate, and if the target difference is met, then that new candidate WAN UEᵢ₊₁ is selected and receives transmission resources for the eNB 20, step 218. If this new candidate WAN UEᵢ₊₁ also does not satisfy the target difference after the parameters were adjusted in step 206, another candidate WAN UE may be tried, if available.

In another embodiment, the network node 20 measures (as per step 200), the attribute value for each one of a plurality of candidates WAN UE's and generates, for example, an ordered list 72 of the attribute value of the signals received from each candidate WAN UE's. Using the list 72, the eNB 20 determines the differences between the attribute values for the received interferer signal 42, caused by the D2D transmission, and signal 40 received from each candidate WAN UEs. The eNB 20 will select a candidate WAN UE associated with an attribute value difference that meets the target difference *Threshold1* (e.g. having *Δpower* above a target power difference)

Returning to the step 206, the transmission parameter that can be adjusted for obtaining the target difference could be for example any one or any combination of a transmitting power, a modulation scheme, a coding scheme, an antenna parameter etc.

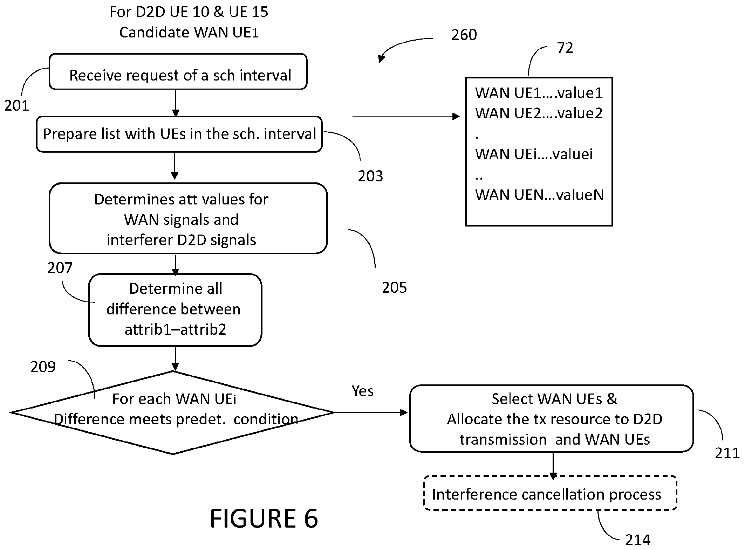

Figure 6 illustrates a flowchart 260 of a method of in-coverage D2D communication according to another embodiment. In this scenario, the transmitting D2D wireless device 10 requests a specific scheduling interval from the network node 20. Once the network node receives the request, it prepares a list 72 with candidate WAN UEs that use the same scheduling interval. Similar to the scenario of Figure 5A, the network node determines the selected attributes values for all candidate WAN UEs and for the transmitting D2D wireless device 10 , step 205, and calculates the attribute value differences between these first attribute values and the second attribute value determined for the D2D transmission, step 207. The candidate WAN UE whose attribute value satisfies the target difference is selected in step 211.The transmitting D2D UE10 will use the same PRB (transmission resource corresponding to the scheduling interval requested by the transmitting D2D device) as the selected WAN UE 25, for transmission to the receiving D2D UE 15.

As a variation to this embodiment described above in connection with Figures 4, 5A, 5B and 6, if more than one D2D pair transmission is simultaneous with that from a WAN UE 25, the eNB 20 may choose to employ hard successive interference cancellation (SIC) with interference rejection combining (IRC). For example IRC can be employed to separate the D2D UE's spatially if possible, followed by SIC or PIC to separate the D2D UE's from the WAN UE 25..

The SIC process attempts to detect and decode one by one the interferers of interest. In LTE, the Hard SIC can take advantage of the Cyclic Redundancy Check attached to each transport block issued by the Medium Access Control (MAC) layer before channel coding: if the CRC check is successful, the transport block has been correctly decoded and the signal can be reconstructed. After the received signal has been cleaned up from one interferer (generally the one with the highest received power), a second interferer can be processed, and so on. The Hard SIC however imposes the constraint that the Modulation and Coding Scheme (MCS) used by the first interferer be more robust than the MCS used for the signal of interest, as it will need to be decoded under the interference of the latter. Note that for the embodiment of multiple D2D pairs transmitting, the eNB processing of the steps described above in connection with Figures 4, 5A, 5B and 6 above may involve multiple measurement and grant messages.

When the observed interference at a receiving D2D UE is high, the receiving device in the pair might keep failing to decode the transmitted message. This interference might be caused by a WAN UE or by another D2D device. According to one embodiment, if a D2D UE is experiencing high interference and is unable to decode successfully, it adopts one the following actions with equal probability (coin toss):
- It divides its power by 2; or
- It increases the transmit power by a constant factor which, in one embodiment, is inversely proportional to the power gain to the eNB.

In doing so, the D2D UE might be able to perform SIC to remove the interference from other devices.

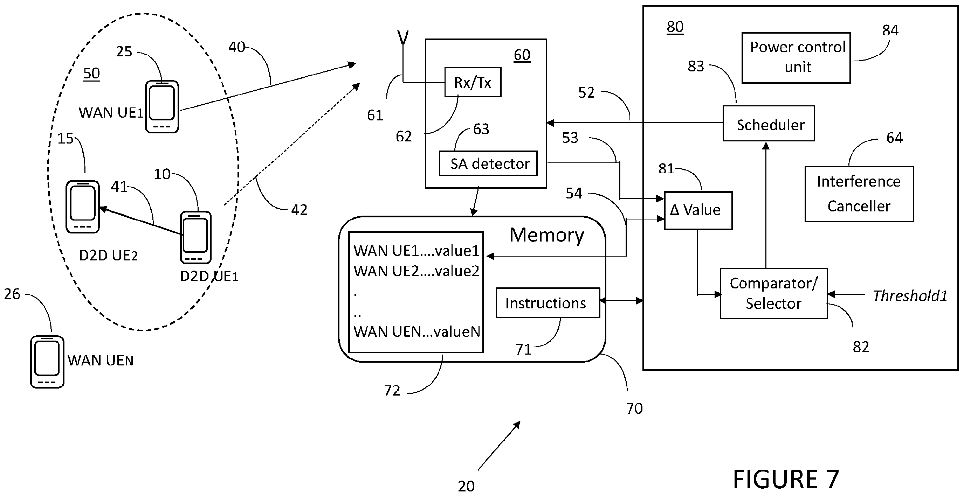

Figure 7 shows a block diagram of an embodiment of a network node 20 that enables interference management for multiuser in-coverage D2D communications. Figure 7 illustrates only the modules of the network node 20 that are relevant to operation of the described embodiment. Also, techniques, systems, subsystems and methods described and illustrated in in this specification as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise.

Those of skill would appreciate that any of the logical blocks, units, processors, and method steps described herein may be implemented using electronic (digital, analog or combinations) hardware, various forms of program or design code incorporating instructions or combinations of both. To clearly illustrate this interchangeability of hardware and software, the modules, blocks or units, various illustrative components, blocks, modules, circuits, are described generally in terms of their functionality. Whether such functionality is implemented as hardware or software depends upon the selected design. Skilled artisans may implement the described functionality in varying ways for each particular application, but such implementation decisions should not be interpreted as causing a departure from the scope of the present disclosure.

Returning to Figure 7, network node 20 includes a transceiver 60, and a memory 70 and one or more processors 80. Transceiver 60 may provide frequency shifting, converting received radio signals to baseband and converting baseband transmit signals to radio signals. The transceiver may also include signal processing functionality such as modulation/demodulation, coding/decoding, interleaving/ deinterleaving, spreading/despreading, inverse fast Fourier transforming (IFFT)/ fast Fourier transforming (FFT), cyclic prefix appending/removal, and baseband signal processing functions, not shown. In Figure 7, transceiver 60 is illustrated as comprising an antenna system 61, a receive/transmit unit 62 and a signal attribute (SA) detector 63. The SA detector 63 determines in the received signal, a first attribute value for the WAN signal 40 received from WAN wireless device 25 and a second attribute value for the interferer signal 42 due to the D2D transmission 41 between the D2D transmitting wireless device 10 and the D2D receiving wireless device 15. As indicated above, for an embodiment where more than one D2D pair transmission is simultaneous with the transmission from the WAN UE, the eNB 20 may choose to employ hard successive interference cancellation (SIC) with interference rejection combining (IRC). For example, IRC can be employed to separate the D2D users spatially if possible, followed by SIC or PIC to separate the D2D users from the WAN user.

Signal attribute detector 63 acquires measurements of respective parameters value for signals received from other UEs (WAN UEs or D2D UEs); Figure 7 shows as an example just one other UE 26 (UE_{N}) besides UE 25 (UE₁). The attribute values may be stored in memory 70 as shown by list 72.

Memory 70 also includes a set of instructions 71 that enable operation of processor 80. Memory 70 can be any type of computer storage media and communication media including any medium that facilitates transfer of a computer program from one place to another and that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer.

For example, if the instruction set 71 is transmitted from a remote source using a coaxial cable, fiber optic cable, twisted pair, digital subscriber line (DSL), or wireless technologies (infrared, radio, and microwave), then the coaxial cable, fiber optic cable, twisted pair, DSL, or wireless technologies are included in the definition of medium.

The processor 80 is shown to include a A value (or attribute value difference determinator) block 81, which determines the differences between the first attribute values acquired for the WAN UEs UE₁ to UE_{N} and the second attribute value for the D2D link 41. As indicated above, the value could be in one embodiment the power of the respective signal received at the eNB. Then, for the example when the attribute value is a power measurement, the Δ*powers* are compared with *Threshold1* in comparator 82. The WAN UEs for which the *Δpower* is greater than *Threshold1,* can be selected to share the uplink transmission resources with the D2D communication. If the Δ*power* for the WAN signal 40 and interferer signal 42 is close to the target *Threshold1,* attribute control unit 84 will transmit power adjustment signals to any of the transmitting devices 10 and 25, to adjust their transmit power for obtaining the Δ*power* equal or greater than *Threshold1.* Depending on the particular configuration, the Power control unit 84 will increase or decrease the transmitting power of WAN device 10, or will increase or decrease the transmitting power of D2D transmitting device 10, or both.

If e.g. UE 25 is selected based on the Δ*power* condition, a scheduler 83 provides an allocation message to UE 25 and to D2D transmitting UE 10, the message indicating the same PRB to be used by both devices. Or, if one of the WAN UE 25 or the transmitting D2D UE 10 already uses the respective PRB, the other of the D2D UE 10 or the WAN UE 25 will receive an allocation of the same PRB.

The processor 80 is illustrated as also comprising an interference detector and canceller 64. Interference canceller 64 illustrates in general terms use of an interference cancellation protocol of choice for removing the interfering signal from the received signals, with a view to extract the WAN signal. It is to be noted that interference canceller 64 is shown as part of the processor 80, for illustration purposes; functionality of this module may be implemented by transceiver 60.

Processor 80 may be implemented by one or more processors. Figure 7 also does not illustrate other functionality at the eNB such as other L2 (MAC, RLC, PDCP) and L3 (RRC) functionality.

The above description is provided to enable persons skilled in the art to implement the various embodiments described and illustrated. The described methods and apparatuses are presented for purpose of illustration and not of limitation.

## Claims

1. A method of interference management of multiuser in-coverage device-to-device, D2D, communications at a network node (20), comprising:
receiving (200) a Wireless Access Network, WAN, signal (40) from a WAN device (25), the WAN signal mixed with an interferer signal (42) caused by a D2D communication between a transmitting D2D device (10) and a receiving D2D device (15) of a D2D pair;
determining (202) an attribute value difference between a first attribute value of the WAN signal and a second attribute value of the interferer signal, wherein the first attribute includes a power value associated with the WAN signal and the second attribute includes a power value associated with the interferer signal and wherein the attribute value difference is a power difference;
if the attribute value difference does not meet a target difference (204):
controlling (206) a transmission parameter of at least one of the WAN device and the transmitting D2D wireless device to adjust the difference to meet the target difference;
if the attribute value difference meets the target difference:
allocating a transmission resource to the WAN device for communication with the network node and to the transmitting D2D wireless device for communication with the receiving D2D wireless device, wherein the target difference is met when the power difference is greater than a preset threshold and wherein the preset threshold is determined as a function of one or more or any combination of a received power of the WAN signal, a received power of the interferer signal, and a channel quality indicator, CQI, for a link between the WAN device and the network node, wherein the transmission resource is a physical resource block, PRB;
determining a second attribute value difference between a further first attribute value of a second WAN signal received at the network node from a second transmitting WAN device and a further second attribute value of a second interferer signal mixed with the second WAN signal by the D2D communication; and
if the second attribute value difference meets the target difference, additionally allocating transmission resources to the second transmitting WAN device, for communication with the network node, wherein allocating the transmission resource comprises allocating the D2D wireless device the same transmission resources as the transmission resources allocated to the second transmitting WAN device.

2. A network node (20) for a wireless communication system comprising:
a transceiver operable to determine a first attribute value of a WAN signal (40) received from a Wireless Access Network, WAN, device (25) and a second attribute value of an interferer signal (42) mixed with the WAN signal due to a device-to-device, D2D, communication between a transmitting D2D wireless device (10) and a receiving D2D wireless device (15) of a D2D pair; one or more processors (80) and
circuitry containing instructions which when executed by said one or more processors (80) cause the network node to:
determine an attribute value difference between the first attribute value of the WAN signal and the second attribute value of the interferer signal, wherein the first attribute includes a power value associated with the WAN signal and the second attribute includes a power value associated with the interferer signal and wherein the attribute value difference is a power difference; and
if the attribute value difference does not meet a target difference, control a transmission parameter of any of the WAN device and the transmitting D2D wireless device to adjust the attribute value difference to meet the target difference;
the circuitry further comprising instructions which when executed cause the network node to allocate transmission resources to the WAN device for communication with the network node and to the transmitting D2D wireless device for communication with the receiving D2D wireless device if the attribute value difference meets the target difference, wherein the target difference is met when the power difference is greater than a preset threshold and wherein the preset threshold is determined as a function of one or more or any combination of a received power of the WAN signal, a received power of the interferer signal, and a channel quality indicator, CQI, for a link between the WAN device and the network node, wherein the transmission resource is a physical resource block, PRB;
the circuitry further comprising instructions which when executed cause the network node to:
determine a second attribute value difference between a further first attribute value of a second WAN signal received at the network node from a second transmitting WAN device and a further second attribute value of a second interferer signal mixed with the second WAN signal by the D2D communication; and
if the second attribute value difference meets the target difference , additionally allocating transmission resource to the second transmitting WAN device, for communication with the network node, wherein allocating the transmission resource comprises allocating the D2D wireless device the same transmission resources as the transmission resources allocated to the second transmitting WAN device.

3. The network node as claimed in claim 2, the circuitry further comprising instructions which when executed cause the network node to use an interference cancelation process for separating the WAN signal from the interferer signal and, optionally,
the circuitry further comprising instructions which when executed cause the network node to perform one or more of successive interference cancellation, parallel interference cancellation and interference rejection combining, IRC, operations.

4. The network node as claimed in claim 2, the circuitry further comprising instructions which when executed cause the network node, if the attribute value difference cannot be adjusted to meet the target difference , to determine a second difference between a further first attribute value of a second WAN signal received at the network node from a second transmitting WAN device and a further second attribute value of a second interferer signal mixed with the second WAN signal by the D2D communication.

5. The network node as claimed in claim 2, wherein the preset threshold is determined using a function of one or more network configuration and operational parameters.

6. The network node as claimed in claim 2, wherein controlling a transmission parameter comprises controlling transmission power of any of the WAN device, D2D transmitter device or both and/or
wherein the transmission parameter is one or more of a transmitting power, a modulation scheme, a coding scheme, and an antenna parameter.

7. The network node as claimed in claim 2, further comprising
determining a third difference between the first attribute value of a WAN signal and a further second attribute value of a second interferer signal mixed with the WAN signal by a second transmitting D2D wireless device in communication with a second receiving D2D device;
if the third difference meets the target difference, additionally allocating from the network node the transmission resource to the second transmitting D2D wireless devices for D2D communication.
if the difference meets a target difference, allocate the transmission resource to the WAN user device for communication to the network node and to the transmitting D2D wireless device for communication with a receiving D2D wireless device of the D2D pair.

8. The network node (1) of any of claims 2-7, wherein said circuitry comprises at least one processor (80) and memory (70) coupled to said processor, said memory comprising said instructions.

9. A computer program comprising instructions which, when executed by a computer, cause the computer to carry out the method according to claim 1.

10. A carrier containing the computer program of claim 9, wherein the carrier is one of an electronic signal, an optical signal, a radio signal, or a computer readable storage medium.

## Patentansprüche

1. Verfahren zur Interferenzverwaltung für Mehrbenutzer-Gerät-zu-Gerät-Kommunikation, Mehrbenutzer-D2D-Kommunikation, innerhalb der Abdeckung an einem Netzwerkknoten (20), umfassend:
Empfangen (200) eines Wireless-Access-Network-Signals, WAN-Signals, (40) von einem WAN-Gerät (25), wobei das WAN-Signal mit einem Störsignal (42) gemischt ist, das durch eine D2D-Kommunikation zwischen einem übertragenden D2D-Gerät (10) und einem empfangenden D2D-Gerät (15) eines D2D-Paares verursacht wird;
Bestimmen (202) einer Attributwertdifferenz zwischen einem ersten Attributwert des WAN-Signals und einem zweiten Attributwert des Störsignals, wobei das erste Attribut einen mit dem WAN-Signal verbundenen Leistungswert beinhaltet und das zweite Attribut einen mit dem Störsignal verbundenen Leistungswert beinhaltet und wobei die Attributwertdifferenz eine Leistungsdifferenz ist;
wenn die Attributwertdifferenz eine Zieldifferenz (204) nicht erreicht:
Steuern (206) eines Übertragungsparameters von mindestens einem des WAN-Geräts und des übertragenden drahtlosen D2D-Geräts, um die Differenz so anzupassen, dass sie die Zieldifferenz erreicht;
wenn die Attributwertdifferenz die Zieldifferenz erreicht:
Zuweisen einer Übertragungsressource an das WAN-Gerät zur Kommunikation mit dem Netzwerkknoten und an das übertragende drahtlose D2D-Gerät zur Kommunikation mit dem empfangenden drahtlosen D2D-Gerät, wobei die Zieldifferenz erreicht ist, wenn die Leistungsdifferenz größer als ein voreingestellter Schwellenwert ist und wobei der voreingestellte Schwellenwert als eine Funktion einer oder mehrerer oder einer beliebigen Kombination aus einer empfangenen Leistung des WAN-Signals, einer empfangenen Leistung des Störsignals und einem Kanalqualitätsindikator, CQI, für eine Verbindung zwischen dem WAN-Gerät und dem Netzwerkknoten bestimmt ist, wobei die Übertragungsressource ein physischer Ressourcenblock, PRB, ist;
Bestimmen einer zweiten Attributwertdifferenz zwischen einem weiteren ersten Attributwert eines zweiten WAN-Signals, das am Netzwerkknoten von einem zweiten übertragenden WAN-Gerät empfangen wird, und einem weiteren zweiten Attributwert eines zweiten Störsignals, das durch die D2D-Kommunikation mit dem zweiten WAN-Signal gemischt ist; und
wenn die zweite Attributwertdifferenz die Zieldifferenz erreicht, zusätzliches Zuweisen von Übertragungsressourcen an das zweite übertragende WAN-Gerät zur Kommunikation mit dem Netzwerkknoten, wobei das Zuweisen der Übertragungsressource Zuweisen zu dem drahtlosen D2D-Gerät derselben Übertragungsressourcen wie die Übertragungsressourcen, die dem zweiten übertragenden WAN-Gerät zugewiesen sind, umfasst.

2. Netzwerkknoten (20) für ein drahtloses Kommunikationssystem, umfassend:
einen Transceiver, der betreibbar ist, um einen ersten Attributwert eines von einem Wireless-Access-Network-Gerät, WAN-Gerät, (25) empfangenen WAN-Signals und einen zweiten Attributwert eines Störsignals (42), das aufgrund einer Gerätzu-Gerät-Kommunikation, D2D-Kommunikation, zwischen einem übertragenden drahtlosen D2D-Gerät (10) und einem empfangenden drahtlosen D2D-Gerät (15) eines D2D-Paares mit dem WAN-Signal gemischt ist, zu bestimmen; einen oder mehrere Prozessoren (80) und
eine Schaltung, die Anweisungen enthält, die beim Ausführen durch den einen oder die mehreren Prozessoren (80) den Netzwerkknoten zu Folgendem veranlassen:
Bestimmen einer Attributwertdifferenz zwischen dem ersten Attributwert des WAN-Signals und dem zweiten Attributwert des Störsignals, wobei das erste Attribut einen mit dem WAN-Signal verbundenen Leistungswert beinhaltet und das zweite Attribut einen mit dem Störsignal verbundenen Leistungswert beinhaltet und wobei die Attributwertdifferenz eine Leistungsdifferenz ist; und,
wenn die Attributwertdifferenz eine Zieldifferenz nicht erreicht, Steuern eines Übertragungsparameters eines beliebigen des WAN-Geräts und des übertragenden drahtlosen D2D-Geräts, um die Attributwertdifferenz so anzupassen, dass sie die Zieldifferenz erreicht;
wobei die Schaltung ferner Anweisungen umfasst, die beim Ausführen den Netzwerkknoten dazu veranlassen, Übertragungsressourcen an das WAN-Gerät zur Kommunikation mit dem Netzwerkknoten und an das übertragende drahtlose D2D-Gerät zur Kommunikation mit dem empfangenden drahtlosen D2D-Gerät zuzuweisen, wenn die Attributwertdifferenz die Zieldifferenz erreicht, wobei die Zieldifferenz erreicht ist, wenn die Leistungsdifferenz größer als ein voreingestellter Schwellenwert ist und wobei der voreingestellte Schwellenwert als eine Funktion einer oder mehrerer oder einer beliebigen Kombination aus einer empfangenen Leistung des WAN-Signals, einer empfangenen Leistung des Störsignals und einem Kanalqualitätsindikator, CQI, für eine Verbindung zwischen dem WAN-Gerät und dem Netzwerkknoten bestimmt ist, wobei die Übertragungsressource ein physischer Ressourcenblock, PRB, ist;
wobei die Schaltung ferner Anweisungen umfasst, die beim Ausführen den Netzwerkknoten zu Folgendem veranlassen:
Bestimmen einer zweiten Attributwertdifferenz zwischen einem weiteren ersten Attributwert eines zweiten WAN-Signals, das am Netzwerkknoten von einem zweiten übertragenden WAN-Gerät empfangen wird, und einem weiteren zweiten Attributwert eines zweiten Störsignals, das durch die D2D-Kommunikation mit dem zweiten WAN-Signal gemischt ist; und
wenn die zweite Attributwertdifferenz die Zieldifferenz erreicht, zusätzliches Zuweisen von Übertragungsressourcen an das zweite übertragende WAN-Gerät zur Kommunikation mit dem Netzwerkknoten, wobei das Zuweisen der Übertragungsressource Zuweisen zu dem drahtlosen D2D-Gerät derselben Übertragungsressourcen wie die Übertragungsressourcen, die dem zweiten übertragenden WAN-Gerät zugewiesen sind, umfasst.

3. Netzwerkknoten nach Anspruch 2, wobei die Schaltung ferner Anweisungen umfasst, die beim Ausführen den Netzwerkknoten dazu veranlassen, einen Interferenzunterdrückungsprozess zu verwenden, um das WAN-Signal vom Störsignal zu trennen, und optional
die Schaltung ferner Anweisungen umfasst, die beim Ausführen den Netzwerkknoten dazu veranlassen, eine oder mehrere von einer sukzessiven Interferenzunterdrückungsoperation, einer parallelen Interferenzunterdrückungsoperation und einer Interferenzabweisungskombinationsoperation, IRC-Operation, durchzuführen.

4. Netzwerkknoten nach Anspruch 2, wobei die Schaltung ferner Anweisungen umfasst, die beim Ausführen den Netzwerkknoten dazu veranlassen, wenn die Attributwertdifferenz nicht angepasst werden kann, um die Zieldifferenz zu erreichen, eine zweite Differenz zwischen einem weiteren ersten Attributwert eines zweiten WAN-Signals, das am Netzwerkknoten von einem zweiten übertragenden WAN-Gerät empfangen wird, und einem weiteren zweiten Attributwert eines zweiten Störsignals, das durch die D2D-Kommunikation mit dem zweiten WAN-Signal gemischt ist, zu bestimmen.

5. Netzwerkknoten nach Anspruch 2, wobei der voreingestellte Schwellenwert unter Verwendung einer Funktion einer oder mehrerer Netzwerkkonfigurationen und Betriebsparameter bestimmt wird.

6. Netzwerkknoten nach Anspruch 2, wobei das Steuern eines Übertragungsparameters Steuern einer Übertragungsleistung eines beliebigen von dem WAN-Gerät, dem D2D-Übertragungsgerät oder beiden umfasst und/oder
wobei der Übertragungsparameter eines oder mehrere von einer Übertragungsleistung, einem Modulationsschema, einem Kodierungsschema und einem Antennenparameter ist.

7. Netzwerkknoten nach Anspruch 2, ferner umfassend
Bestimmen einer dritten Differenz zwischen dem ersten Attributwert eines WAN-Signals und einem weiteren zweiten Attributwert eines zweiten Störsignals, das mit dem WAN-Signal durch ein zweites übertragendes drahtloses D2D-Gerät, das mit einem zweiten empfangenden D2D-Gerät kommuniziert, gemischt ist;
wenn die dritte Differenz die Zieldifferenz erreicht, zusätzliches Zuweisen der Übertragungsressource von dem Netzwerkknoten an die zweiten übertragenden drahtlosen D2D-Geräte für die D2D-Kommunikation;
wenn die Differenz eine Zieldifferenz erreicht, Zuweisen der Übertragungsressource an das WAN-Benutzergerät zur Kommunikation mit dem Netzwerkknoten und an das übertragende drahtlose D2D-Gerät zur Kommunikation mit einem empfangenden drahtlosen D2D-Gerät des D2D-Paares.

8. Netzwerkknoten (1) nach einem der Ansprüche 2-7, wobei die Schaltung mindestens einen Prozessor (80) und einen an den Prozessor gekoppelten Speicher (70) umfasst, wobei der Speicher die Anweisungen umfasst.

9. Computerprogramm umfassend Anweisungen, die beim Ausführen durch einen Computer den Computer dazu veranlassen, das Verfahren nach Anspruch 1 auszuführen.

10. Träger, der das Computerprogramm nach Anspruch 9 enthält, wobei der Träger eines von einem elektronischen Signal, einem optischen Signal, einem Funksignal oder einem computerlesbaren Speichermedium ist.

## Revendications

1. Procédé de gestion de brouillage pour une communication de dispositif à dispositif, D2D, multi-utilisateur dans la couverture au niveau d'un noeud de réseau (20), comprenant :
la réception (200) d'un signal (40) de réseau d'accès sans fil, WAN, provenant d'un dispositif WAN (25), le signal WAN étant mélangé à un signal brouilleur (42) provoqué par une communication D2D entre un dispositif D2D émetteur (10) et un dispositif D2D récepteur (15) d'une paire D2D ;
la détermination (202) d'une différence de valeur d'attribut entre une première valeur d'attribut du signal WAN et une seconde valeur d'attribut du signal brouilleur, dans lequel le premier attribut comporte une valeur de puissance associée au signal WAN et le second attribut comporte une valeur de puissance associée au signal brouilleur et dans lequel la différence de valeur d'attribut est une différence de puissance ;
si la différence de valeur d'attribut ne correspond pas à une différence cible (204) :
la commande(206) d'un paramètre émetteur d'au moins l'un parmi le dispositif WAN et/ou le dispositif sans fil D2D émetteur pour ajuster la différence afin d'atteindre la différence cible ;
si la différence de valeur d'attribut correspond à la différence cible :
l'attribution d'une ressource émettrice au dispositif WAN pour une communication avec le noeud de réseau et au dispositif sans fil D2D émetteur pour une communication avec le dispositif sans fil D2D récepteur, dans lequel la différence cible est atteinte lorsque la différence de puissance est supérieure à un seuil prédéfini et dans lequel le seuil prédéfini est déterminé en fonction d'un ou de plusieurs ou d'une quelconque combinaison d'une puissance reçue du signal WAN, d'une puissance reçue du signal brouilleur et d'un indicateur de qualité de canal, CQI, pour une liaison entre le dispositif WAN et le noeud de réseau, dans lequel la ressource émettrice est un bloc de ressources physiques, PRB ;
la détermination d'une deuxième différence de valeur d'attribut entre une autre première valeur d'attribut d'un second signal WAN reçu au niveau du noeud de réseau en provenance d'un second dispositif WAN émetteur et d'une autre seconde valeur d'attribut d'un second signal brouilleur mélangé au second signal WAN par la communication D2D ; et
si la deuxième différence de valeur d'attribut correspond à la différence cible, une attribution supplémentaire des ressources émettrices au second dispositif WAN émetteur, pour une communication avec le noeud de réseau, dans lequel l'attribution de la ressource émettrice comprend l'attribution au dispositif sans fil D2D des mêmes ressources émettrices que les ressources émettrices attribuées au second dispositif WAN émetteur.

2. Noeud de réseau (20) pour un système de communication sans fil, comprenant :
un émetteur-récepteur utilisable pour déterminer une première valeur d'attribut d'un signal WAN (40) reçu d'un dispositif de réseau d'accès sans fil, WAN, (25) et une seconde valeur d'attribut d'un signal brouilleur (42) mélangé au signal WAN dû à une communication de dispositif à dispositif, D2D, entre un dispositif sans fil D2D émetteur (10) et un dispositif sans fil D2D récepteur (15) d'une paire D2D ; un ou plusieurs processeurs (80) et
des circuits contenant des instructions qui, lorsqu'elles sont exécutées par lesdits un ou plusieurs processeurs (80), amènent le noeud de réseau à :
déterminer une différence de valeur d'attribut entre la première valeur d'attribut du signal WAN et la seconde valeur d'attribut du signal brouilleur, dans lequel le premier attribut comporte une valeur de puissance associée au signal WAN et le second attribut comporte une valeur de puissance associée au signal brouilleur et dans lequel la différence de valeur d'attribut est une différence de puissance ; et
si la différence de valeur d'attribut ne correspond pas à une différence cible, commander un paramètre émetteur de l'un quelconque du dispositif WAN ou du dispositif sans fil D2D émetteur pour ajuster la différence de valeur d'attribut pour correspondre à la différence cible ;
les circuits comprenant en outre des instructions qui, lorsqu'elles sont exécutées, amènent le noeud de réseau à attribuer des ressources d'émission au dispositif WAN pour une communication avec le noeud de réseau et au dispositif sans fil D2D émetteur pour une communication avec le dispositif sans fil D2D récepteur si la différence de valeur d'attribut correspond à la différence cible, dans lequel la différence cible est atteinte lorsque la différence de puissance est supérieure à un seuil prédéfini et dans lequel le seuil prédéfini est déterminé en fonction d'un ou de plusieurs ou d'une quelconque combinaison d'une puissance reçue du signal WAN, d'une puissance reçue du signal brouilleur, et d'un indicateur de qualité de canal, CQI, pour une liaison entre le dispositif WAN et le noeud de réseau, dans lequel la ressource émettrice est un bloc de ressources physiques, PRB ;
les circuits comprenant en outre des instructions qui, lorsqu'elles sont exécutées, amènent le noeud de réseau à :
déterminer une deuxième différence de valeur d'attribut entre une autre première valeur d'attribut d'un second signal WAN reçu au niveau du noeud de réseau en provenance d'un second dispositif WAN émetteur et une autre seconde valeur d'attribut d'un second signal brouilleur mélangé avec le second signal WAN par la communication D2D ; et
si la deuxième différence de valeur d'attribut atteint la différence cible, attribuer en outre une ressource émettrice au second dispositif WAN émetteur, pour une communication avec le noeud de réseau, dans lequel l'attribution de la ressource émettrice comprend l'attribution au dispositif sans fil D2D des mêmes ressources émettrices que les ressources émettrices attribuées au second dispositif WAN émetteur.

3. Noeud de réseau selon la revendication 2, les circuits comprenant en outre des instructions qui, lorsqu'elles sont exécutées, amènent le noeud de réseau à utiliser un processus d'annulation de brouillage pour séparer le signal WAN du signal brouilleur et, éventuellement,
les circuits comprenant en outre des instructions qui, lorsqu'elles sont exécutées, amènent le noeud de réseau à effectuer une ou plusieurs opérations successives d'annulation de brouillage, d'annulation de brouillage parallèle et de combinaison de rejet de brouillage, IRC.

4. Noeud de réseau selon la revendication 2, les circuits comprenant en outre des instructions qui, lorsqu'elles sont exécutées, amènent le noeud de réseau, si la différence de valeur d'attribut ne peut pas être ajustée pour atteindre la différence cible, à déterminer une deuxième différence entre une autre première valeur d'attribut d'un second signal WAN reçu au niveau du noeud de réseau en provenance d'un second dispositif WAN émetteur et une autre seconde valeur d'attribut d'un second signal brouilleur mélangé au second signal WAN par la communication D2D.

5. Noeud de réseau selon la revendication 2, dans lequel le seuil prédéfini est déterminé en utilisant une fonction d'une ou de plusieurs configurations de réseau et de paramètres opérationnels.

6. Noeud de réseau selon la revendication 2, dans lequel la commande d'un paramètre émetteur comprend la commande de la puissance émettrice de l'un quelconque du dispositif WAN, du dispositif émetteur D2D ou des deux et/ou
dans lequel le paramètre émetteur est un ou plusieurs éléments parmi une puissance d'émission, un schéma de modulation, un schéma de codage et un paramètre d'antenne.

7. Noeud de réseau selon la revendication 2, comprenant en outre
la détermination d'une troisième différence entre la première valeur d'attribut d'un signal WAN et une autre seconde valeur d'attribut d'un second signal brouilleur mélangé au signal WAN par un second dispositif sans fil D2D émetteur en communication avec un second dispositif D2D récepteur ;
si la troisième différence atteint la différence cible, l'attribution supplémentaire, à partir du noeud de réseau, de la ressource émettrice aux seconds dispositifs sans fil D2D émetteurs pour une communication D2D ;
si la différence correspond à une différence cible, l'attribution de la ressource émettrice au dispositif utilisateur WAN pour une communication avec le noeud de réseau et au dispositif sans fil D2D émetteur pour une communication avec un dispositif sans fil D2D récepteur de la paire D2D.

8. Noeud de réseau (1) selon l'une quelconque des revendications 2 à 7, dans lequel lesdits circuits comprennent au moins un processeur (80) et une mémoire (70) couplée audit processeur, ladite mémoire comprenant lesdites instructions.

9. Support de stockage lisible par ordinateur comprenant des instructions qui, lorsqu'elles sont exécutées par un ordinateur, amènent l'ordinateur à exécuter le procédé selon la revendication 1.

10. Support contenant le programme informatique selon la revendication 9, dans lequel le support est l'un parmi un signal électronique, un signal optique, un signal radio, ou un support de stockage lisible par ordinateur.
